# EUROPÄISCHE PATENTSCHRIFT

(11) **EP 2 365 030 B1**
(45) Veröffentlichungstag und Bekanntmachung des Hinweises auf die Patenterteilung: **05.09.2012**
(21) Anmeldenummer: 11157541.1
(22) Anmeldetag: 09.03.2011
(51) Int. Cl.: C08K 5/00, C08K 5/5313, C08K 5/29, C08L 67/02

(54) **-N=C=N- enthaltende Verbindungen zur Verhinderung des thermischen Abbaus von Metall-dialkylphosphinat enthaltenden Polyalkylenterephthalaten in der Schmelze**
Compounds containing -N=C=N- for preventing thermal decomposition of metal dialkylphosphinate containing polyalkylene terephthalates in the melt
Composés contenant du -N=C=N- utilisé pour éviter la décomposition thermique durant la fusion de polyalkylène térépthalaltes contenant des dialkylphosphinates de metaux

(30) Priorität: 04.12.2010 DE 102010053483; 10.03.2010 EP 10156098
(43) Veröffentlichungstag der Anmeldung: 14.09.2011
(73) Patentinhaber: LANXESS Deutschland GmbH, 51369 Leverkusen (DE)
(72) Erfinder: Endtner, Jochen, 50679, Köln (DE); Bienmüller, Matthias, 47803, Krefeld (DE); Wambach, Wolfgang, 51065, Köln (DE)

(56) Entgegenhaltungen:
- EP-A1- 1 522 551
- DE-A1- 19 815 120
- DE-A1- 19 920 276

## Beschreibung

Die vorliegende Erfindung betrifft die Verwendung von -N=C=N- enthaltenden Verbindungen zur Verhinderung oder zur Verminderung des thermischen Abbaus von Metall-dialkylphosphinat enthaltenden Polyalkylenterephthalat-Schmelzen und ein Verfahren zum Einsatz von -N=C=N-enthaltenden Verbindungen bei der Verhinderung oder Verminderung des thermischen Abbaus von Metall-dialkylphosphinat enthaltenden Polyalkylenterephthalat-Schmelzen.

EP 1 400 549 A1 beschreibt Polymerisationskatalysatoren für Polyester auf Basis eines Phosphormetallsalzes, insbesondere wenn das Metall Aluminium ist, wodurch man Polyesterfilme erhält, die in ihrer thermischen Stabilität verbessert sind und deren thermischer Abbau während des Schmelzvorganges verhindert wird.

Auch EP 1 719 790 A1 beschreibt Polykondensationskatalysatoren für Polyester auf Basis eines Gemisches aus einer Aluminium-Verbindung und einer Phosphorverbindung die bevorzugt eine phenolische Gruppe aufweist. Wie in EP 1 400 549 A1 muss jedoch nach der Polykondensation der Katalysator inaktiviert werden (z.B. durch Phosphorverbindungen), um die Thermostabilität des Polyesters in seiner Weiterverarbeitung zu erhöhen.

In EP 1 818 352 A1 wird die thermische Stabilität durch Carboxyl-Endgruppen im Polyalkylenterephthalat-Harz erzielt. Zusätzliche Verbesserungen werden wie beim oben zitierten Stand der Technik durch Zugabe von Phenolverbindungen erhalten.

US 2006/0293491 A1 beschreibt ein Verfahren zur Verbesserung der Thermostabilität von Polyestern durch Reaktion einer acylierten Verbindung mit wenigstens einer phenolischen Gruppe mit einer aromatischen Carbonsäure unter Bestrahlung von Mikrowellen im Rahmen einer Solid-Phase-Polymerisation von Polyester.

DE-A-19 920 276 offenbart thermoplastische Formmassen aus einem Polyalkylterephthalat sowie einer Mischung aus mindestens einer Phosphorverbindung und mindestens einer Stabilisatorverbindung, wovon einige eine -N=C=N-Einheit enthalten.

EP-A 1 522 551 beansprucht phosphorhaltige Flammschutzmittelagglomerate geringer Schüttdichte, die Aggregate und/oder Primärteilchen aus Phosphinsäuresalzen und/oder Diphosphinsäuresalzen und/oder deren Polymere enthalten und mit Hilfe eines Hilfsmittels zusammenhaften sowie auch ein Verfahren zur Herstellung dieser phosphorhaltigen Flammschutzmittelagglomerate und die Verwendung derselben als Flammschutzmittel in Polymeren.

Nachteilig an den Verfahren des Standes der Technik ist die zusätzliche Inaktivierung der Substanzen die erst den thermischen Abbau in der Polymerisationsstufe verhindern. Infolgedessen steht die Substanz zur Verhinderung des thermischen Abbaus im Verarbeitungsprozess des Polyesters nicht mehr zur Verfügung wo ebenfalls hohe Temperaturen und gegebenenfalls hohe Drücke zum Einsatz kommen.

Die Aufgabe der vorliegenden Anmeldung bestand nun darin, Metall-dialkylphosphinat enthaltende Polyalkylenterephthalat-Schmelzen hinsichtlich ihres thermischen Abbaus zu stabilisieren, wenn nicht sogar den thermischen Abbau gänzlich zu verhindern so dass die Metall-dialkylphosphinat enthaltenden Polyalkylenterephthalat-Schmelzen neben dem Herstellungsprozeß (Compoundierung) auch den anschließenden Verarbeitungsprozeß (beispielsweise Spritzguß) überstehen und keinen oder zumindest einen deutlich verringerten thermischen Abbau erleiden.

Die Lösung der Aufgabe und Gegenstand der vorliegenden Erfindung ist die Verwendung von -N=C=N- enthaltenden Verbindungen zur Verhinderung oder Verminderung des thermischen Abbaus von Metall-dialkylphosphinat enthaltenden Polyalkylenterephthalat-Schmelzen.

Bevorzugte Polyalkylenterephthalate sind Polyethylenterephthalat (PET) und Polybutylenterephthalat (PBT). Erfindungsgemäß besonders bevorzugt werden die -N=C=N- enthaltenden Verbindungen zur Verhinderung oder Verminderung des thermischen Abbaus von Metall-dialkylphosphinat enthaltenden PET- und PBT-Schmelzen eingesetzt. Insbesondere werden die -N=C=N- enthaltenden Verbindungen zur Verhinderung oder Verminderung des thermischen Abbaus von Metall-dialkylphosphinat enthaltenden PBT-Schmelzen eingesetzt.

Erfindungsgemäß bevorzugt einzusetzende -N=C=N- enthaltende Verbindungen sind Verbindungen der allgemeinen Formeln (I), (II) oder (III) 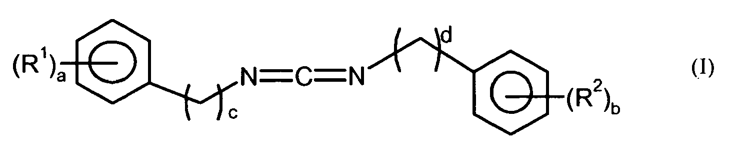 wobei
R¹, R² unabhängig voneinander für Wasserstoff- oder für einen C₁- bis C₁₀-Alkyl-, C₆- bis C₁₂-Aryl-, C₇- bis C₁₃-Aralkyl-, C₇- bis C₁₃-Alkylarylrest stehen,
a, b unabhängig voneinander für eine ganze Zahl von 1 bis 5 stehen und
c, d unabhängig voneinander für eine ganze Zahl von 0 bis 10 stehen; 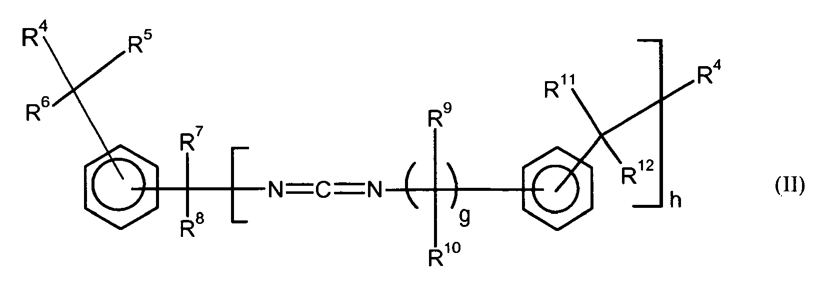 wobei
R⁴ für NCO steht,
R⁵, R⁶, R⁷, R⁸, R⁹, R¹⁰, R¹¹, R¹² unabhängig voneinander für Wasserstoff-, oder für einen Rest der Reihe C₁- bis C₁₀-Alkyl-, C₆- bis C₁₂-Aryl-, C₇- bis C₁₃-Aralkyl-, C₇- bis C₁₃-Alkylaryl stehen,
g für eine ganze Zahl von 0 bis 5 steht,
h für eine ganze Zahl von 1 bis 100 steht; 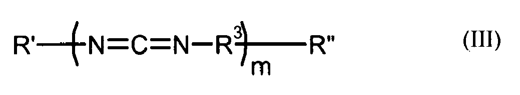 wobei in Formel (III)
m für eine ganze Zahl von 1 bis 5000, bevorzugt für eine ganze Zahl von 2 bis 500 steht,
R³ einen Aryl- bzw. 4,4'-Methylen-bis-(2,6-dialkylphenyl)-Rest bedeutet, der in mindestens einer Orthostellung, bevorzugt in beiden Orthostellungen zu dem aromatischen Kohlenstoffatom, das die -N=C=N-Gruppe trägt, aliphatische und/oder cycloaliphatische Substituenten mit mindestens 2 C-Atomen, bevorzugt verzweigte oder cyclische aliphatische Reste mit mindestens 3 C-Atomen trägt,
R' Aryl, Aralkyl oder R-NCO bedeutet und
R" -N=C=N-Aryl, -N=C=N-Aralkyl oder -NCO bedeutet.

Erfindungsgemäß umfasst der Begriff der -N=C=N- enthaltenden Verbindungen aber auch -N=C=N- enthaltende Polymere, erhalten durch radikalische Polymerisation unter Einbeziehung von doppelbindungshaltigen Monomeren die mindestens eine -N=C=N-Gruppe enthalten.

Besonders bevorzugte -N=C=N- enthaltende Verbindungen sind Verbindungen der Formeln (IV) bis (VI) 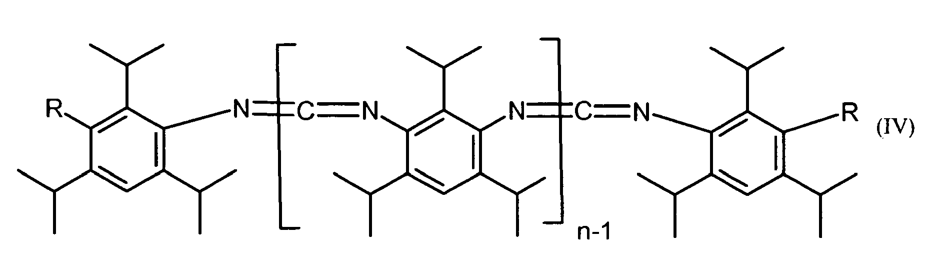 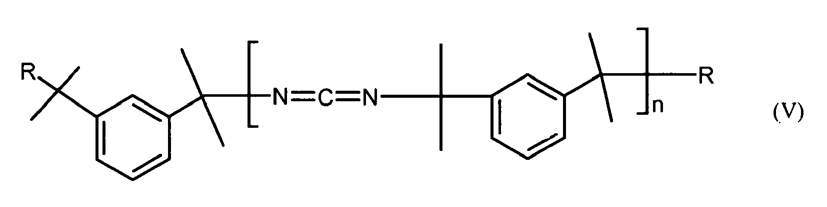 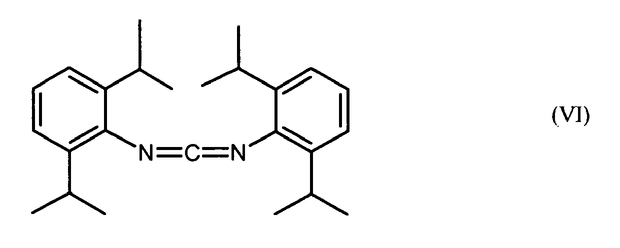 mit R = NCO
bei denen
n für eine ganze Zahl von 1 bis 200 steht.

In einer alternativen Ausführungsform können die endständigen -NCO-Gruppen der Verbindungen (II) bis (V) unabhängig voneinander auch für -NCO-Umsetzungsprodukte stehen.

Hierzu gehört die Umsetzung mit Alkoholen zu Urethanen der allgemeinen Formel -NHCOOX, wobei -OX für ein Alkylpolyetherglycol, ein Polyesterpolyol, einen Alkohol mit 1 bis 20 C-Atomen oder für einen Polyesterrest steht, die Umsetzung mit Aminen zu Harnstoffderivaten der allgemeinen Formel -NHCONY, wobei -NY für primäre oder sekundäre Amine mit Alkyl-, Cycloalkyl- bzw. Aralkylresten sowie für Aminoalkyltrialkoxysilan steht, sowie die Umsetzung mit Glycidylethern zu Oxazolidonen.

Erfindungsgemäß sind die Umsetzungsprodukte mit Alkoholen zu Urethanen bevorzugt.

Erfindungsgemäß ganz besonders bevorzugt werden -N=C=N- enthaltende Verbindungen der Formel (IV) mit R = NCO eingesetzt, die als Stabaxol^{®} P von der RheinChemie GmbH zu beziehen sind.

In einer bevorzugten Ausführungsform werden die -N=C=N- enthaltenden Verbindungen in Metall-dialkylphosphinat enthaltenden Polyalkylenterephthalat-Schmelzen eingesetzt, bei denen das Metall-dialkylphosphinat Aluminium-tris[dialkylphosphinat] oder Zink-bis[dialkylphosphinat] ist. Die vorliegende Erfindung betrifft deshalb auch ein Stoffgemisch enthaltend -N=C=N- enthaltende Verbindungen und Aluminium-tris[dialkylphosphinate] oder Zink-bis[dialkylphosphinate] sowie die Verwendung der -N=C=N- enthaltenden Verbindungen zur Verhinderung des thermischen Abbaus in Aluminium-tris[dialkylphosphinat]- **oder Zink**-bis[dialkylphosphinat]- enthaltenden Polyalkylenterephthalat-Schmelzen.

Erfindungsgemäß steht Alkyl in den Aluminium-tris[dialkylphosphinate] oder Zink-bis[dialkylphosphinate] für C₁- bis C₁₀-Alkyl-, bevorzugt für C₂- bis C₆-Alkyl, besonders bevorzugt für Ethyl.

Die vorliegende Erfindung betrifft bevorzugt die Verwendung der nachfolgend aufgeführten Stoffgemische zur Verhinderung oder Verminderung des thermischen Abbaus von Metall-dialkylphosphinat enthaltenden Polyalkylenterephthalat-Schmelzen, wobei Polyethylenterephthalat (PET) oder Polybutylenterephthalat (PBT) bevorzugt sind, und PBT besonders bevorzugt ist mit Verbindungen der Formel (I) mit Zink-bis[dialkylphosphinat], bevorzugt Zink-bis[diethylphosphinat] oder mit

Verbindungen der Formel (I) mit Aluminium-tris[dialkylphosphinat], bevorzugt Aluminiumtris [diethylphosphinat] oder mit

Verbindungen der Formel (II) mit Zink-bis [dialkylphosphinat], bevorzugt Zink-bis[diethylphosphinat] oder mit

Verbindungen der Formel (II) mit Aluminium-tris[dialkylphosphinat], bevorzugt Aluminium-tris[diethylphosphinat] oder mit

Verbindungen der Formel (III) mit Zink-bis[dialkylphosphinat]. bevorzugt Zink-bis[diethylphosphinat] oder mit

Verbindungen der Formel (III) mit Aluminium-tris[dialkylphosphinat] bevorzugt Aluminiumtris [diethylphosphinat].

Die vorliegende Erfindung betrifft besonders bevorzugt die Verwendung der nachfolgend aufgeführten Stoffgemische zur Verhinderung oder Verminderung des thermischen Abbaus von Metall-dialkylphosphinat enthaltenden Polyalkylenterephthalat-Schmelzen, wobei Polyethylenterephthalat (PET) oder Polybutylenterephthalat (PBT) bevorzugt sind, und PBT besonders bevorzugt ist mit

Verbindungen der Formel (IV) mit Zink-bis[dialkylphosphinat], bevorzugt Zink-bis[diethylphosphinat] oder mit

Verbindungen der Formel (IV) mit Aluminium-tris[dialkylphosphinat], bevorzugt Aluminiumtris [diethylphosphinat] oder mit

Verbindungen der Formel (V) mit Zink-bis[dialkylphosphinat], bevorzugt Zinkbis [diethylphosphinat] oder mit

Verbindungen der Formel (V) mit Aluminium-tris[dialkylphosphinat], bevorzugt Aluminiumtris [diethylphosphinat] oder mit

Verbindungen der Formel (VI) mit Zink-bis[dialkylphosphinat], bevorzugt Zinkbis [diethylphosphinat] oder mit

Verbindungen der Formel (VI) mit Aluminium-tris[dialkylphosphinat], bevorzugt Aluminiumtris [diethylphosphinat].

Die -N=C=N- enthaltenden Verbindungen werden in Mengen von 0,03 bis 83 Gew.-Teile, besonders bevorzugt in Mengen von 0,79 bis 19 Gew.-Teilen und ganz besonders bevorzugt in Mengen von 1,5 bis 15 Gew.-Teilen jeweils bezogen auf 100 Gew.-Teile der Summe aus -N=C=N- enthaltender Verbindung und Metall-dialkylphosphinat eingesetzt.

Die hinsichtlich ihres thermischen Abbaus in Schmelzen erfindungsgemäß zu verbessernden Thermoplaste enthalten demnach

1-95 Gew.-% Polyalkylenterephthalat

0,01 - 5 Gew.-% -N=C=N- enthaltende Verbindung

1-35 Gew.-% Zink-bis[dialkylphosphinat] oder Aluminium-tris[dialkylphosphinat].

Bevorzugt enthalten die hinsichtlich ihres thermischen Abbaus in Schmelzen erfindungsgemäß zu verbessernden Thermoplaste

5-95 Gew.-% Polyalkylenterephthalat

0,1-3 Gew.-% -N=C=N- enthaltende Verbindung

5-30 Gew.-% Zink-bis[dialkylphosphinat]- oder Aluminium-tris[dialkylphosphinat].

Besonders bevorzugt enthalten die hinsichtlich ihres thermischen Abbaus in Schmelzen erfindungsgemäß zu verbessernden Thermoplaste

10-92 Gew.-% Polyalkylenterephthalat

0,2 - 2 Gew.-% -N=C=N- enthaltende Verbindung

8,5-25 Gew.-% Zink-bis[dialkylphosphinat]- oder Aluminium-tris[dialkylphosphinat].

Die vorliegende Erfindung betrifft aber auch ein Verfahren zur Verhinderung oder Verminderung des thermischen Abbaus von Metall-dialkylphosphinat enthaltenden Polyalkylenterephthalat-Schmelzen.

Bevorzugt betrifft die vorliegende Erfindung ein Verfahren zur Verhinderung oder Verminderung des thermischen Abbaus von Metall-dialkylphosphinat enthaltenden Polyalkylenterephthalat-Schmelzen während der Herstellung der Polyalkylenterephthalat-Formmassen durch Aufschmelzen und Vermischen der Einzelkomponenten, bevorzugt im Compoundier-Verfahren, insbesondere bevorzugt mit einem Zweiwellenextruder.

Insbesondere bevorzugt betrifft die vorliegende Erfindung ein Verfahren zur Verhinderung oder Verminderung des thermischen Abbaus von Metall-dialkylphosphinat enthaltenden Polyalkylenterephthalat-Schmelzen wie sie beim Einsatz von Polyalkylenterephthalat-Granulaten im Spritzguss, beim Kneten oder in der Extrusion zum Einsatz kommen.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren/Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyester, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Erfindungsgemäße Verfahren zur Verhinderung oder Verminderung des thermischen Abbaus thermoplastischer Formmassen arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Ganz besonders bevorzugt betrifft die vorliegende Erfindung deshalb ein Verfahren zur Verhinderung oder Verminderung des thermischen Abbaus von Metalldialkylphosphinat enthaltenden Polyalkylenterephthalaten in der Schmelze, dadurch gekennzeichnet, dass man bezogen auf 100 Gew.-Teile der Summe aus -N=C=N- enthaltende Verbindung und Metall-dialkylphosphinat 0,03 bis 83 Gew.-Teile -N=C=N- enthaltende Verbindung einsetzt und die Schmelze innerhalb eines Temperaturbereichs von 230 bis 330°C und bei Drücken von maximal 2500 bar vorliegt.

Erfindungsgemäß in der Schmelze vor thermischen Abbau zu schützende Formmassen können in einer bevorzugten Ausführungsform zusätzlich zu den Komponenten A) bis C) noch
D) 0,001 bis 25 Gew.-%, bevorzugt 0,01 bis 20 Gew.-% Melamincyanurat und/oder Melaminpolyphosphat enthalten, wobei der alleinige Einsatz von Melamincyanurat bevorzugt ist.

In einer weiteren bevorzugten Ausführungsform können die erfindungsgemäß zu behandelnden Formmassen zusätzlich zu den Komponenten A) bis C) und gegebenenfalls D) oder anstelle von D) noch
E) 0,001 bis 70 Gew.-%, vorzugsweise 5 bis 50 Gew.-%, besonders bevorzugt 9 bis 47 Gew.-% wenigstens eines Füll- oder Verstärkungsstoffes enthalten.

Als Füllstoff oder Verstärkungsstoff können aber auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann in einer bevorzugten Ausführungsform oberflächenmodifiziert sein, beispielsweise mit einem Haftvermittler bzw. Haftvermittlersystem, besonders bevorzugt auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem, bevorzugt auf Silanbasis, ausgerüstet sein.

Besonders bevorzugte Haftvermittler auf Silanbasis für die Vorbehandlung sind Silanverbindungen der allgemeine Formel (VII)

(X-(CH₂)_{q})ₖ-Si-(O-CᵣH₂ᵣ₊₁)₄₋ₖ

worin
X für NH₂-, HO- oder 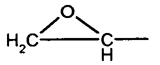 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer weiteren bevorzugten Ausführungsform können die zu behandelnden Formmassen zusätzlich zu den Komponenten A) bis E) oder anstelle von D) und/oder E) noch
F) 0,001 bis 65 Gew.-%, bevorzugt 0,01 bis 30 Gew.-%, insbesondere 0,1 bis 10 Gew.-% wenigstens eines Additivs enthalten.

Additive der Komponente F) im Sinne der vorliegenden Erfindung sind bevorzugt Stabilisatoren, insbesondere UV-Stabilisatoren, Thermostabilisatoren, Gammastrahlenstabilisatoren, Hydrolysestabilisatoren, Antistatika, Fließhilfsmittel, Entformungsmittel, Brandschutzadditive, Emulgatoren, Nukleierungsmittel, Weichmacher, Gleitmittel, Farbstoffe, Pigmente, Additive zur Erhöhung der elektrischen Leitfähigkeit, Verträglichkeitsvermittler oder Elastomermodifikatoren. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können bevorzugt sterisch gehinderte Phenole und Phosphite, ferner Hydrochinone, aromatische sekundäre Amine wie z.B. Diphenylamine, substituierte Resorcine, Salicylate, Benzotriazole, Benzophenone und Bisphenol-A-Epichlorhydrin Copolymere wie z.B. solche der CAS-Nr. 25068-38-6 sowie verschieden substituierte Vertreter dieser Gruppen und deren Mischungen eingesetzt werden.

Als Pigmente bzw. Farbstoffe können bevorzugt Titandioxid, Zinksulfid, Ultramarinblau, Eisenoxid, Ruß, Phthalocyanine, Chinacridone, Perylene, Nigrosin und Anthrachinone eingesetzt werden.

Als Nukleierungsmittel können bevorzugt Natrium- oder Calciumphenylphosphinat, Aluminiumoxid, Siliziumdioxid sowie bevorzugt Talkum eingesetzt werden.

Als Gleit- und Entformungsmittel können bevorzugt Esterwachse, Pentaerythritoltetrastearat (PETS), langkettige Fettsäuren (z.B. Stearinsäure oder Behensäure) und Ester, deren Salze (z.B. Ca-oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden, wobei PETS bevorzugt eingesetzt wird.

Als Weichmacher können bevorzugt Phthalsäuredioctylester, Phthalsäuredibenzylester, Phthalsäurebutylbenzylester, Kohlenwasserstofföle, N-(n-Butyl)benzolsulfonamid eingesetzt werden.

Als Additive zur Erhöhung der elektrischen Leitfähigkeit können bevorzugt Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden. Als nanoskalige Fasern können besonders bevorzugt sogenannte "single wall Kohlenstoff-Nanotubes" oder "multi wall Kohlenstoff-Nanotubes" (z.B. der Firma Hyperion Catalysis) eingesetzt werden.

Als Verträglichkeitsvermittler werden vorzugsweise thermoplastische Polymere mit polaren Gruppen eingesetzt.

Erfindungsgemäß kommen demgemäß Polymere zum Einsatz, die
F.1 ein vinylaromatisches Monomer,
F.2 wenigstens ein Monomer ausgewählt aus der Gruppe C₂ bis C₁₂-Alkylmethacrylate, C₂ bis C₁₂-Alkylacrylate, Methacrylnitrile und Acrylnitrile und
F.3 α,β-ungesättigte Komponenten enthaltend Dicarbonsäureanhydride enthalten.

Vorzugsweise werden als Komponente F.1, F.2 und F.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die Menge an Maleinsäureanhydrid in dem Terpolymer kann in weiten Grenzen schwanken. Vorzugsweise beträgt die Menge 0,2 bis 5 Mol-%. Besonders bevorzugt sind Mengen zwischen 0,5 und 1,5 Mol-%. In diesem Bereich werden besonders gute mechanische Eigenschaften bezüglich Zugfestigkeit und Reißdehnung erzielt.

Das Terpolymer kann nach bekannter Weise hergestellt werden. Eine geeignete Methode ist das Lösen von Monomerkomponenten des Terpolymers, z. B. des Styrols, Maleinsäureanhydrids oder Acrylnitrils in einem geeigneten Lösemittel, z. B. Methylethylketon (MEK). Zu dieser Lösung werden ein oder gegebenenfalls mehrere chemische Initiatoren hinzugesetzt. Geeignete Initiatoren sind z.B. Peroxide. Sodann wird das Gemisch für mehrere Stunden bei erhöhten Temperaturen polymerisiert. Anschließend werden das Lösemittel und die nicht umgesetzten Monomere in an sich bekannter Weise entfernt.

Das Verhältnis zwischen der Komponente F.1 (vinylaromatisches Monomer) und der Komponente F.2, z.B. dem Acrylnitrilmonomer in dem Terpolymer liegt vorzugsweise zwischen 80:20 und 50:50.

Als vinylaromatisches Monomer F.1 ist Styrol besonders bevorzugt.

Für die Komponente F.2 ist besonders bevorzugt Acrylnitril geeignet.

Als Komponente F.3 ist besonders bevorzugt Maleinsäureanhydrid geeignet.

Beispiele für erfindungsgemäß einsetzbare Verträglichkeitsvermittler sind in den EP-A 0 785 234 (= US 5 756 576) und EP-A 0 202 214 (= US 4 713 415) beschrieben. Erfindungsgemäß bevorzugt sind insbesondere die in der EP-A 0 785 234 genannten Polymere.

Die Verträglichkeitsvermittler können allein oder in beliebiger Mischung untereinander enthalten sein.

Eine weitere, als Verträglichkeitsvermittler besonders bevorzugte Substanz ist ein Terpolymer von Styrol und Acrylnitril im Gewichtsverhältnis 2,1:1 enthaltend 1 Mol-% Maleinsäureanhydrid sowie ein Terpolymer von Ethen, Glycidylmethacrylat und Methacrylat wie z.B. solche der CAS-Nr. 308079-07-4.

Verträglichkeitsvermittler werden insbesondere dann eingesetzt, wenn die Formmasse Pfropfpolymerisate enthält.

Als Flammschutzmittel bzw. Brandschutzadditive können handelsübliche Halogenverbindungen mit Synergisten oder handelsübliche Stickstoffverbindungen oder zusätzlich zur Komponente C) organische, anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122(= CA 210 9024 A1)) können eingesetzt werden. Ebenso kommen Salze aliphatischer oder aromatischer Sulfonsäuren in Frage. Als halogenhaltige, insbesondere bromierte und chlorierte Verbindungen seien beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol und Decabrom-diphenylether. Als organische Phosphorverbindungen sind z.B. die Phosphorverbindungen gemäß WO-A 98/17720 (= US 6 538 024) geeignet, wie z.B. Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische und anorganische Phosphonsäurederivate und deren Salze, anorganische und gegebenenfalls von der Komponente C) unterschiedliche organische Phosphinsäurederivate und deren Salze, insbesondere von der Komponente C) unterschiedliche Metalldialkylphosphinate, wobei die Komponente C) für Aluminium-tris[dialkylphosphinate] oder Zink-bis[dialkylphosphinate] steht. Weitere mögliche Flammschutzmittel bzw. Brandschutzadditive sind außerdem roter Phosphor, Phosphite, Hypophosphite, Phospinoxide, Phosphazene, Melaminpyrophosphat und deren Mischungen. Als Stickstoffverbindungen kommen solche aus der Gruppe der Allantoin-, Cyanursäure-, Dicyandiamid, Glycoluril-, Guanidin- Ammonium- und Melaminderivate, bevorzugt Allantoin, Benzoguanamin, Glykoluril, Kondensationsprodukte des Melamins z.B. Melem, Melam oder Melom bzw. höher kondensierte Verbindungen dieses Typs und Addukte des Melamins mit anderen Säuren als Cyanursäure (Melamincyanurat) und Polyphosphorsäure (Melaminpolyphosphat) in Frage. Als Synergisten sind z.B. Antimonverbindungen, insbesondere Antimontrioxid, Natriumantimonat und Antimonpentoxid, Zinkverbindungen wie z.B. Zinkborat, Zinkoxid, Zinkphosphat, Zinkstannat und Zinksulfid, Zinnverbindungen wie z.B. Zinnstannat und Zinnborat sowie Magnesiumverbindungen wie z.B. Magnesiumoxid, Magnesiumcarbonat und Magensiumborat geeignet. Auch können dem Flammschutzmittel sogenannte Kohlenstoffbildner wie z.B. Pheno 1-Formaldehydharze, Polycarbonate, Polyphenylether, Polyimide, Polysulfone, Polyethersulfone, Polyphenylensulfide und Polyetherketone sowie Antitropfmittel wie Tetrafluorethylenpolymerisate zugesetzt werden.

Gegebenenfalls erfindungsgemäß als Additiv einzusetzende Elastomermodifikatoren umfassen ein oder mehrere Pfropfpolymerisate von
F.4 5 bis 95 Gew.-%, vorzugsweise 30 bis 90 Gew.-%, wenigstens eines Vinylmonomeren auf
F.5 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage F.5 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere F.4 sind vorzugsweise Gemische aus
F.4.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
F.4.2 1 bis 50 Gew.-% Vinylcyanide (ungesättigte Nitrile wie Acrylnitril und Methacrylnitril) und/oder (Meth)Acrylsäure-(C₁-C₈)-Alkylester (wie z.B. Methylmethacrylat, Glycidylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere F.4.1 sind ausgewählt aus mindestens einem der Monomere Styrol, α-Methylstyrol und Methylmethacrylat, bevorzugte Monomere F.4.2 sind ausgewählt aus mindestens einem der Monomere Acrylnitril, Maleinsäureanhydrid, Glycidylmethacrylat und Methylmethacrylat.

Besonders bevorzugte Monomere sind F.4.1 Styrol und F.4.2 Acrylnitril.

Für die in den Elastomermodifikatoren einzusetzenden Pfropfpolymerisate geeignete Pfropfgrundlagen F.5 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen F.5 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß F.4.1 und F.4.2), mit der Maßgabe, dass die Glasübergangstemperatur der Komponente F.5 bei <10°C, vorzugsweise bei <0°C, besonders bevorzugt bei <-10°C liegt.

Besonders bevorzugte Propfgrundlagen F.5 sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage F.5 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Pfropfgrundlagen F.5 die vorzugsweise Polymerisate aus Acrylsäurealkylestern, gegebenenfalls mit bis zu 40 Gew.-%, bezogen auf F.5 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat, Glycidylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage F.5.

Bei cyclischen vernetzenden Monomeren mit mindestens 3 ethylenisch ungesättigten Gruppen ist es vorteilhaft, die Menge auf unter 1 Gew.-% der Pfropfgrundlage F.5 zu beschränken.

Bevorzugte "andere" polymerisierbare, ethylenisch ungesättigte Monomere, die neben den Acrylsäureestern gegebenenfalls zur Herstellung der Pfropfgrundlage F.5 dienen können, sind z.B. Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage F.5 sind Emulsionspolymerisate, die einen Gelgehalt von mindestens 60 Gew.-% aufweisen.

Weitere geeignete Pfropfgrundlagen gemäß F.5 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Hierzu können z.B. Elastomere mit einer Blockcopolymerstruktur gehören. Hierzu können weiterhin z.B. thermoplastisch aufschmelzbare Elastomere gehören. Beispielhaft und bevorzugt sind hier EPM-, EPDM- und/oder SEBS-Kautschuke genannt.

Erfindungsgemäß einzusetzende Fließhilfsmittel sind aus der Literatur wie z.B. Kunststoffe 2000, 9, S. 116-118 bekannt und können beispielsweise Fettsäureester von Polyolen oder Amide aus Fettsäuren oder Aminen sein.

Alternativ zu oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind aus der Literatur bekannt und können beispielsweise auf verzweigten Polyestern, Polyamiden, Polyesteramiden, Polyethern oder Polyaminen basieren, wie sie in Kunststoffe 2001, 91, S. 179-190, oder in Advances in Polymer Science 1999, 143 (Branched Polymers II), S. 1-34 beschrieben sind.

Erfindungsgemäß bevorzugt einzusetzende Fließhilfsmittel können Copolymerisate, bevorzugt statistische Copolymerisate aus mindestens einem Olefin, bevorzugt α-Olefin und mindestens einem Methacrylsäureester oder Acrylsäureester eines aliphatischen Alkohols, wobei der MFI des Copolymerisats 100 g /10 min, vorzugsweise 150 g /10 min, besonders bevorzugt 300 g / 10 min nicht unterschreitet. In einer bevorzugten Ausführungsform besteht das Copolymerisat zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen (ausgewählt aus der Gruppe umfassend Epoxide, Oxetane, Anhydride, Imide, Aziridine, Furane, Säuren, Amine, Oxazoline) enthalten.

Geeignete Olefine, bevorzugt α-Olefine als Bestandteil der Copolymerisate weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates ausschließlich über die Olefine in das Copolymer eingebracht.

Der Gehalt des Olefins am Copolymerisat liegt zwischen 50 und 90 Gew.-%, bevorzugt zwischen 55 und 75 Gew.-%.

Das in einer bevorzugten Ausführungsform als Fließhilfsmittel einzusetzende Copolymerisat wird weiterhin definiert durch den zweiten Bestandteil neben dem Olefin. Als zweiter Bestandteil sind Alkyl- oder Arylalkylester der Acrylsäure oder Methacrylsäure geeignet, deren Alkyl- oder Arylalkylgruppe aus 5-30 Kohlenstoffatomen gebildet wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Methacrylsäure- oder Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Bevorzugt kann die Alkyl- oder Arylalkylgruppe des Methacrylsäure- oder Acrylsäureesters ausgewählt sein aus der Gruppe umfassend 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkyl- oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Erfindungsgemäß besonders bevorzugt wird als Fließhilfsmittel ein Copolymerisat eingesetzt bei dem das Olefin mit Acrylsäure-(2-ethyl)-hexylester copolymerisiert wird. Ebenfalls geeignet sind Mischungen der beschriebenen Acrylsäure- oder Methacrylsäurester.

Bevorzugt ist hierbei die Verwendung von mehr als 60 Gew.-%, besonders bevorzugt mehr als 90 Gew.-% und ganz besonders bevorzugt die Verwendung von 100 Gew.-% Acrylsäure-(2-ethyl)-hexylester bezogen auf die Gesamtmenge an Acrylsäure- und Methacrylsäurester im Copolymerisat.

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates ausschließlich über die Acrylsäure- oder Methacrylsäurester in das Copolymer eingebracht.

Der Gehalt der Acrylsäure- oder Methacrylsäureester am Copolymerisat liegt zwischen 10 und 50 Gew.-%, bevorzugt zwischen 25 und 45 Gew.-%.

Als Fließhilfsmittel erfindungsgemäß geeignete Copolymerisate zeichnen sich neben der Zusammensetzung durch das niedrige Molekulargewicht aus. Dementsprechend sind für die erfindungsgemäß vor thermischem Abbau zu bewahrenden Formmassen nur Copolymerisate geeignet, die einen MFI-Wert gemessen bei 190°C und einer Belastung von 2,16 kg von mindestens 100 g /10min, bevorzugt von mindestens 150 g /10min, besonders bevorzugt von mindestens 300 g / 10 min aufweisen.

Erfindungsgemäß als Fließhilfsmittel besonders geeignete Copolymerisate können ausgewählt sein aus der Gruppe der von der Fa. Atofina unter dem Markennamen Lotryl^{®} EH angebotenen Materialien, die gewöhnlich als Schmelzkleber Verwendung finden.

Zur Klarstellung sei angemerkt, dass vom Rahmen der vorliegenden Erfindung alle aufgeführten, allgemeinen oder in Vorzugsbereichen genannten Definitionen und Parameter in beliebigen Kombinationen umfasst sind. Erfindungsgemäß ergeben sich für die vor thermischem Abbau zu bewahrenden thermoplastischen Formmassen folgende bevorzugte Kombinationen der Komponenten

A,B,C; A,B,C,D; A,B,C,E; A,B,C,F; A,B,C,D,E; A,B,C,D,F, A,B,C,D,E,F.

Die Summe der Anteile aller Komponenten ergänzt sich jeweils zu 100 Gew.-%.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

### Beispiele

Zum Nachweis der erfindungemäß beschriebenen Verbesserungen der Compoundstabilität in der Schmelze werden die einzelnen Komponenten in einem Zweiwellenextruder (ZSK 26 Mega Compounder der Fa. Coperion Werner & Pfleiderer (Stuttgart, Deutschland), bei Temperaturen zwischen 260 und 290°C in der Schmelze vermischt, als Strang ausgetragen, bis zur Granulierfähigkeit abgekühlt und granuliert.

Vor weiteren Schritten wird das Granulat bei 120°C im Vakuumtrockenschrank für ca. 2h getrocknet.

Als Maß für die Schädigung in der Schmelze wird eine MVR-Messung nach ISO1133 an einem Fließprüfgerät B4106.200 der Fa. Zwick/Roell nach 5 und 20 Minuten Verweilzeit durchgeführt.

Die Prüfung nach 5 minütiger Verweilzeit im Fließprüfgerät erlaubt eine vergleichende Beurteilung des Abbaus in der Schmelze während der vorausgegangenen Compoundierung im Zweiwellenextruder. Die Prüfung nach 20 minütiger Verweilzeit gibt schließlich einen direkten Vergleich des Abbaus der Zusammensetzung in der Schmelze und lässt sich daher beispielsweise auf Verarbeitungsschritte in der Schmelze nach der Compoundierung (z.B. Spritzguss) übertragen. Dabei lässt sich ein größerer Abbau durch eine stärkere Verringerung der Schmelzviskosität und damit einhergehend einem größeren MVR Wert-Anstieg zeigen.

In den Versuchen wurde verwendet:
Komponente A1: Lineares Polybutylenterephthalat (Pocan® B 1300, Handelsprodukt der Lanxess Deutschland GmbH, Leverkusen, Deutschland) mit einer intrinsischen Viskosität von ca. 0,93 cm³/g (gemessen in Phenol : 1,2-Dichlorbenzol =1:1 1 bei 25°C)
Komponente A2: Lineares Polyethylenterephthalat (Polyester Chips PET V004, Fa. Invista, Wichita, USA)
Komponente B: Polymere -N=C=N- enthaltende Verbindung der Formel IV (Stabaxol P100 der Fa. RheinChemie Rheinau GmbH, Mannheim, Deutschland)
Komponente C1: Aluminium-tris[diethylphosphinat] (Exolit® OP1240 der Fa. Clariant GmbH, Frankfurt am Main, Deutschland)
Komponente C2: Zink-bis[diethylphosphinat] (Exolit^{®} OP950 der Clariant GmbH, Frankfurt am Main, Deutschland)
Komponente D1: Melamincyanurat, (Melapur® MC25, der Fa. CIBA, Basel, Schweiz)
Komponente D2: Melaminpolyphosphat (Melapur^{®} 200/70 der Fa. CIBA, Basel, Schweiz)
Komponente E: Mit silanhaltigen Verbindungen beschlichtete Glasfaser mit einem Durchmesser von 10 µm (CS 7967, Handelsprodukt der Lanxess N.V., Antwerpen, Belgien)
Komponente F1: Für die Verwendung in thermoplastischen Polyestern gebräuchliche Entformungsmittel wie z.B. Montansäureester (Licowax^{®} E der Fa. Clariant GmbH, Frankfurt am Main, Deutschland) oder Pentaerythrit-tetrastearat (PETS) (Loxiol® VPG 861, Fa. Cognis Deutschland GmbH, Düsseldorf, Deutschland)
Die verwendeten Entformungsmittel (Komponente F1) stimmen für entsprechende Vergleichsbeispiele und Beispiele jeweils in Art und Menge überein.
Komponente F2: Nukleierungsmittel: Talkum [CAS-Nr. 14807-96-6]. Die verwendeten Nukleierungsmittel stimmen für entsprechende Vergleichsbeispiele und Beispiele jeweils in Art und Menge überein.
Komponente F3: Thermostabilisator: Tetrakis(2,4-di-tert-butylphenyl)-[1,1-biphenyl]-4,4'-diylbisphosphonit (Irgafos® P-EPQ der Fa. CIBA, Basel, Schweiz).
Anmerkung: Die hier gelisteten Komponenten F1, F2 und F3 sind auf die Tabellen 1 und 2 bezogen, jedoch nicht auf die unter Komponente F) definierten Additive F.1, F.2 und F.3.
Die Summe der Anteile der Komponenten ergänzt sich zu 100 Gew.-%.

**Tabelle 1**

| Komponente | Einheit | Ex 1 | Com. Ex 1 | Ex 2 | Com. Ex 2 | Ex 3 | Com. Ex 3 | Ex 5 | Com. Ex 5 |
|---|---|---|---|---|---|---|---|---|---|
| A1 | [%] | 77,7 | 79,7 | 83,85 | 84,6 | 61,25 | 61,7 | 30,1 | 30,6 |
| A2 | [%] | | | | | | | 20 | 20 |
| B | [%] | 2 | | 0,75 | | 0,45 | | 0,5 | |
| C1 | [%] | 13,3 | 13,3 | 10 | 10 | 18 | 18 | 12 | 12 |
| D1 | [%] | 6,7 | 6,7 | 5 | 5 | 7 | 7 | 12 | 12 |
| E | [%] | | | | | 13 | 13 | 25 | 25 |
| F1 | [%] | 0,3 | 0,3 | 0,3 | 0,3 | 0,3 | 0,3 | 0,3 | 0,3 |
| F3 | [%] | | | 0,1 | 0,1 | | | 0,1 | 0,1 |
| MVR nach 5min 260°C/ 2,16 kg | [cm³/10min] | 31 | 41 | 41 | 65 | 26 | 28 | 9 | 13 |
| MVR nach 20min 260°C/ 2,16 kg | [cm³/10min] | 31 | 70 | 50 | 96 | 35 | 41 | 12 | 18 |

Angaben der Komponenten in Gew.-% bezogen auf die Gesamtformmasse

**Tabelle 2**

| Komponente | Einheit | Ex 6 | Com. Ex 6 |
|---|---|---|---|
| A1 | [%] | 26,4 | 27,9 |
| A2 | [%] | 19 | 19 |
| B | [%] | 1,5 | |
| C2 | [%] | 11 | 11 |
| D2 | [%] | 11 | 11 |
| E | [%] | 30 | 30 |
| F1 | [%] | 0,5 | 0,5 |
| F2 | [%] | 0,5 | 0,5 |
| F3 | [%] | 0,1 | 0,1 |
| MVR nach 5min 270°C/2,16 kg | [cm³/10min] | 12 | 26 |
| MVR nach 20min 270°C/2,16 kg | [cm³/10min] | 35 | 90 |

Angaben der Komponenten in Gew.-% bezogen auf die Gesamtformmasse

Tabelle 1 und 2 zeigen in den erfindungsgemäßen Beispielen jeweils niedrigere MVR Werte nach 5 Minuten, was für die deutlich geringere Schädigung bei der vorausgegangenen Schmelzeextrusion im Zweiwellenextruder spricht. Ferner wird gezeigt, dass in den erfindungsgemäßen Beispielen die MVR Werte nach 20 Minuten weniger stark von denen bei 5 Minuten abweichen als die der nicht erfindungsgemäßen Vergleichsbeispiele, was den geringeren Abbau in der Schmelze in den erfindungsgemäßen Beispielen belegt.

## Patentansprüche

1. Verwendung von -N=C=N- enthaltenden Verbindungen zur Verhinderung oder Verminderung des thermischen Abbaus von Metall-dialkylphosphinat enthaltenden Polyalkylenterephthalaten in der Schmelze.

2. Verwendung gemäß Anspruch 1, **dadurch gekennzeichnet, dass** die -N=C=N- enthaltenden Verbindungen im Stoffgemisch mit Zink-bis[dialkylphosphinat] oder Aluminium-tris[dialkylphosphinat] eingesetzt werden, worin Alkyl für einen C₁- bis C₁₀-Alkylrest, bevorzugt für C₂- bis C₆-Alkylrest, besonders bevorzugt für Ethyl steht.

3. Verwendung gemäß der Ansprüche 1 oder 2, **dadurch gekennzeichnet, dass** als -N=C=N-enthaltende Verbindungen Verbindungen der allgemeinen Formeln (I), (II) oder (III) 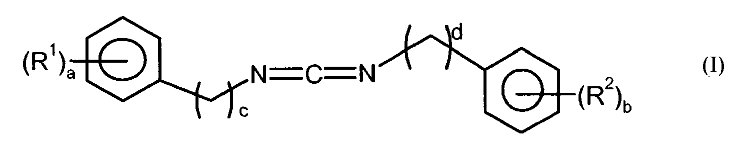 wobei
R¹, R² unabhängig voneinander für Wasserstoff- oder für einen C₁- bis C₁₀-Alkyl-, C₆- bis C₁₂-Aryl-, C₇- bis C₁₃-Aralkyl-, C₇- bis C₁₃-Alkylarylrest stehen,
a, b unabhängig voneinander für eine ganze Zahl von 1 bis 5 stehen und
c, d unabhängig voneinander für eine ganze Zahl von 0 bis 10 stehen; 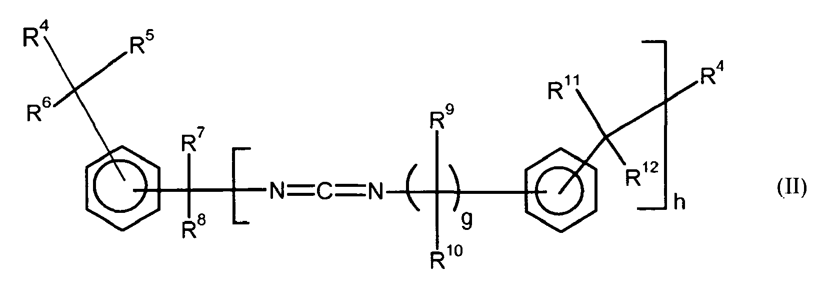 wobei
R⁴ für NCO steht,
R⁵, R⁶, R⁷, R⁸, R⁹, R¹⁰, R¹¹, R¹² unabhängig voneinander für Wasserstoff-, oder für einen Rest der Reihe C₁- bis C₁₀-Alkyl-, C₆- bis C₁₂-Aryl-, C₇- bis C₁₃-Aralkyl-, C₇- bis C₁₃-Alkylaryl stehen,
g für eine ganze Zahl von 0 bis 5 steht,
h für eine ganze Zahl von 1 bis 100 steht; 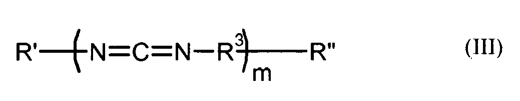 wobei in Formel (III)
m für eine ganze Zahl von 1 bis 5000, bevorzugt für eine ganze Zahl von 2 bis 500 steht,
R³ einen Aryl- bzw. 4,4'-Methylen-bis-(2,6-dialkylphenyl)-Rest bedeutet, der in mindestens einer Orthostellung, bevorzugt in beiden Orthostellungen zu dem aromatischen Kohlenstoffatom, das die -N=C=N-Gruppe trägt, aliphatische und/oder cycloaliphatische Substituenten mit mindestens 2 C-Atomen, bevorzugt verzweigte oder cyclische aliphatische Reste mit mindestens 3 C-Atomen trägt,
R' Aryl, Aralkyl oder R-NCO bedeutet,
R" -N=C=N-Aryl, -N=C=N-Aralkyl oder -NCO bedeutet,
eingesetzt werden.

4. Verwendung gemäß der Ansprüche 1 bis 3, **dadurch gekennzeichnet, dass** als -N=C=N-enthaltende Verbindungen Verbindungen der Formeln (IV) bis (VI) 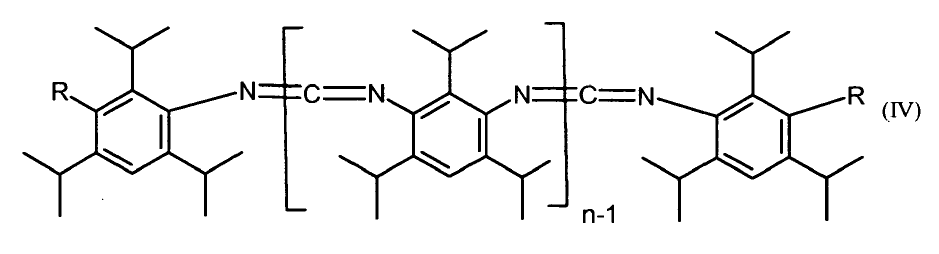 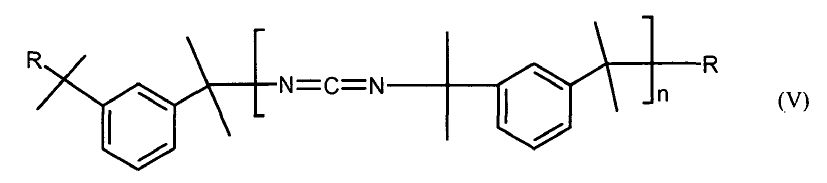 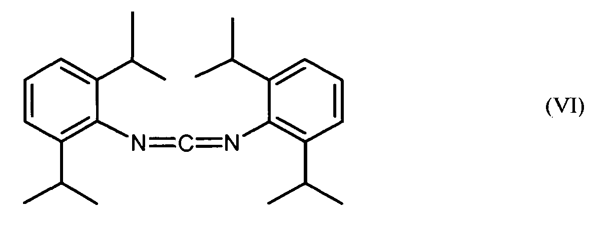 mit R = NCO
bei denen
n für eine ganze Zahl von 1 bis 200 steht, eingesetzt werden.

5. Verwendung gemäß Anspruch 4, **dadurch gekennzeichnet, dass** als -N=C=N- enthaltende Verbindungen Verbindungen der Formel (IV) in Kombination mit Aluminium-tris[diethylphosphinat] eingesetzt werden.

6. Verwendung gemäß einem der Ansprüche 1 bis 5, **dadurch gekennzeichnet, dass** als Carbodiimide auch -N=C=N-enthaltende Polymere erhältlich durch radikalische Polymerisation unter Einbeziehung von doppelbindungshaltigen Monomeren, die mindestens eine -N=C=N-Gruppe enthalten, eingesetzt werden.

7. Verwendung gemäß Anspruch 3, **dadurch gekennzeichnet, dass** die Polyalkylenterephtalate mit
Verbindungen der Formel (I) mit Zink-bis[dialkylphosphinat], bevorzugt Zink-bis[diethylphosphinat], oder mit
Verbindungen der Formel (I) mit Aluminium-tris[dialkylphosphinat], bevorzugt Aluminiumtris[diethylphosphinat], oder mit
Verbindungen der Formel (II) mit Zink-bis[dialkylphosphinat], bevorzugt Zink-bis[diethylphosphinat], oder mit
Verbindungen der Formel (II) mit Aluminium-tris[dialkylphosphinat], bevorzugt Aluminiumtris[diethylphosphinat], oder mit
Verbindungen der Formel (III) mit Zink-bis[dialkylphosphinat]. bevorzugt Zink-bis[diethylphosphinat], oder mit
Verbindungen der Formel (III) mit Aluminium-tris[dialkylphosphinat], bevorzugt Aluminium-tris[diethylphosphinat] eingesetzt werden.

8. Verwendung gemäß Anspruch 4, **dadurch gekennzeichnet, dass** die Polyalkylenterephthalate mit
Verbindungen der Formel (IV) mit Zink-bis[dialkylphosphinat], bevorzugt Zink-bis[diethylphosphinat], oder mit
Verbindungen der Formel (IV) mit Aluminium-tris[dialkylphosphinat], bevorzugt Aluminium-tris[diethylphosphinat], oder mit
Verbindungen der Formel (V) mit Zink-bis[dialkylphosphinat], bevorzugt Zink-bis[diethylphosphinat], oder mit
Verbindungen der Formel (V) mit Aluminium-tris[dialkylphosphinat], bevorzugt Aluminium-tris[diethylphosphinat], oder mit
Verbindungen der Formel (VI) mit Zink-bis[dialkylphosphinat], bevorzugt Zink-bis[diethylphosphinat], oder mit
Verbindungen der Formel (VI) mit Aluminium-tris[dialkylphosphinat], bevorzugt Aluminium-tris[diethylphosphinat] eingesetzt werden.

9. Verwendung gemäß der Ansprüche 3 bis 8, **dadurch gekennzeichnet, dass** die endständigen - NCO-Gruppen der Verbindungen (II) bis (V) unabhängig voneinander auch für -NCO-Umsetzungsprodukte stehen.

10. Verfahren zur Verhinderung oder Verminderung des thermischen Abbaus von Metall-dialkylphosphinat enthaltenden Polyalkylenterephthalat-Schmelzen, **dadurch gekennzeichnet, dass** man bezogen auf 100 Gew.-Teile der Summe aus -N=C=N-enthaltender Verbindung und Metall-dialkylphosphinat 0,03 bis 83 Gew.Teile -N=C=N-enthaltende Verbindung einsetzt und die Schmelze innerhalb eines Temperaturbereichs von 230 bis 330°C und bei Drücken von maximal 2500 bar vorliegt.

11. Verfahren gemäß Anspruch 10, **dadurch gekennzeichnet, dass** es sich um Schmelzen handelt, die bei der Herstellung der thermoplastischen Formmassen durch Aufschmelzen und Vermischen der Einzelkomponenten entstehen, bevorzugt im Compoundier-Verfahren.

12. Verfahren gemäß Anspruch 10, **dadurch gekennzeichnet, dass** es sich um Schmelzen im Spritzguss, beim Kneten oder in der Extrusion thermoplastischer Formmassen handelt.

## Claims

1. Use of compounds comprising -N=C=N- for preventing or mitigating thermal degradation of polyalkylene terephthalates comprising metal dialkylphosphinate, in the melt.

2. Use according to Claim 1, **characterized in that** the compounds comprising -N=C=N- are used in a substance mixture with zinc bis[dialkylphosphinate] or aluminium tris[dialkylphosphinate], in which alkyl is a C₁-C₁₀-alkyl moiety, preferably C₂-C₆-alkyl moiety, particularly preferably ethyl.

3. Use according to Claim 1 or 2, **characterized in that** compounds used comprising -N=C=N- comprise compounds of the general formulae (I), (II) or (III) 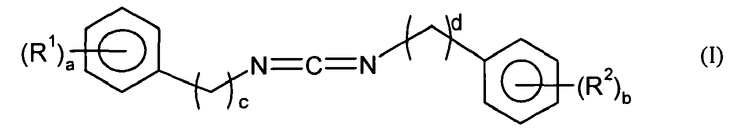 where
R¹ and R² are mutually independently hydrogen or a C₁-C₁₀-alkyl moiety, C₆-C₁₂-aryl moiety, C₇-C₁₃-aralkyl moiety, or C₇-C₁₃-alkylaryl moiety,
a and b are mutually independently a whole number from 1 to 5 and
c and d are mutually independently a whole number from 0 to 10; 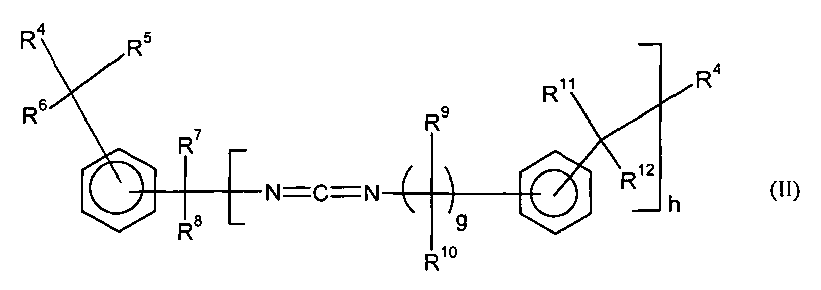 where
R⁴ is NCO,
R⁵, R⁶, R⁷, R⁸, R⁹, R¹⁰, R¹¹, R¹² are mutually independently hydrogen or a moiety in the series C₁-C₁₀-alkyl, C₆-C₁₂-aryl, C₇-C₁₃-aralkyl, and C₇-C₁₃-alkylaryl,
g is a whole number from 0 to 5,
h is a whole number from 1 to 100; 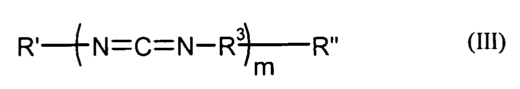 where, in formula (III)
m is a whole number from 1 to 5000, preferably a whole number from 2 to 500,
R³ is an aryl moiety or, respectively, 4,4'-methylenebis(2,6-dialkylphenyl) moiety which, in at least one ortho position, preferably in both ortho positions with respect to the aromatic carbon atom that bears the -N=C=N- group, bears aliphatic and/or cycloaliphatic substituents having at least 2 carbon atoms, preferably branched or cyclic aliphatic moieties having at least 3 carbon atoms,
R' is aryl, aralkyl or R-NCO,
R" is -N=C=N-aryl, -N=C=N-aralkyl or -NCO.

4. Use according to Claims 1 to 3, **characterized in that** compounds used comprising -N=C=N- comprise compounds of the formula (IV) to (VI) 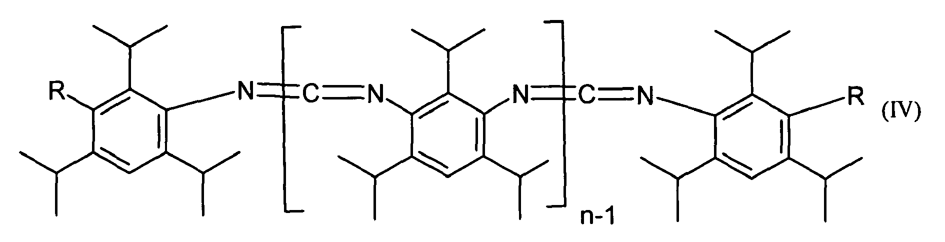 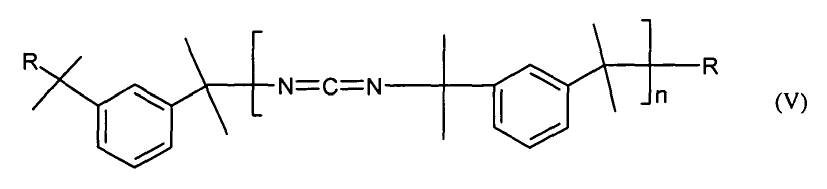 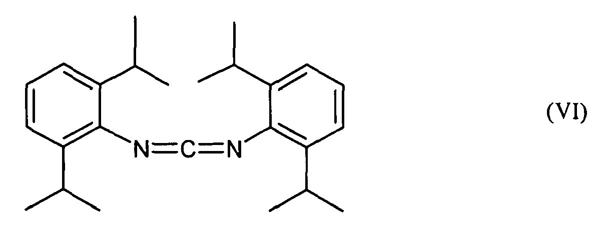 where R = NCO
in which
n is a whole number from 1 to 200.

5. Use according to Claim 4, **characterized in that** compounds used comprising -N=C=N-comprise compounds of the formula (IV) in combination with aluminium tris[diethylphosphinate].

6. Use according to any of Claims 1 to 5, **characterized in that** carbodiimides used also comprise polymers which comprise -N=C=N- and which are obtainable via free-radical polymerization with involvement of monomers which contain a double bond and which comprise at least one -N=C=N- group.

7. Use according to Claim 3, **characterized in that** the polyalkylene terephthalates are used with
compounds of the formula (I) with zinc bis[dialkylphosphinate], preferably zinc bis[diethylphosphinate], or with
compounds of the formula (I) with aluminium tris[dialkylphosphinate], preferably aluminium tris[diethylphosphinate], or with
compounds of the formula (II) with zinc bis[dialkylphosphinate], preferably zinc bis[diethylphosphinate], or with
compounds of the formula (II) with aluminium tris[dialkylphosphinate], preferably aluminium tris[diethylphosphinate], or with
compounds of the formula (III) with zinc bis[dialkylphosphinate], preferably zinc bis[diethylphosphinate], or with
compounds of the formula (III) with aluminium tris[dialkylphosphinate], preferably aluminium tris[diethylphosphinate].

8. Use according to Claim 4, **characterized in that** the polyalkylene terephthalates are used with
compounds of the formula (IV) with zinc bis[dialkylphosphinate], preferably zinc bis[diethylphosphinate], or with
compounds of the formula (IV) with aluminium tris[dialkylphosphinate], preferably aluminium tris[diethylphosphinate], or with
compounds of the formula (V) with zinc bis[dialkylphosphinate], preferably zinc bis[diethylphosphinate], or with
compounds of the formula (V) with aluminium tris[dialkylphosphinate], preferably aluminium tris[diethylphosphinate], or with
compounds of the formula (VI) with zinc bis[dialkylphosphinate], preferably zinc bis[diethylphosphinate], or with
compounds of the formula (VI) with aluminium tris[dialkylphosphinate], preferably aluminium tris[diethylphosphinate].

9. Use according to Claims 3 to 8, **characterized in that** the terminal -NCO groups of the compounds (II) to (V) also mutually independently represent -NCO reaction products.

10. Process for preventing or mitigating thermal degradation of polyalkylene terephthalate melts comprising metal dialkylphosphinate, **characterized in that**, based on 100 parts by weight of the entirety of compound comprising -N=C=N- and metal dialkylphosphinate, from 0.03 to 83 parts by weight of compound comprising -N=C=N- are used and the melt is within the temperature range from 230 to 330°C and is subject to pressures of at most 2500 bar.

11. Process according to Claim 10, **characterized in that** the melts concerned are produced, preferably in the compounding process, via melting and mixing of the individual components during production of the thermoplastic moulding compositions.

12. Process according to Claim 10, **characterized in that** the melts concerned are those in injection moulding, kneading or extrusion of thermoplastic moulding compositions.

## Revendications

1. Utilisation de composés contenant -N=C=N- pour empêcher ou réduire la décomposition thermique de polyalkylène téréphtalates contenant un dialkylphosphinate de métal dans la masse fondue.

2. Utilisation selon la revendication 1, **caractérisée en ce que** les composés contenant -N=C=N- sont utilisés en mélange avec un bis[dialkylphosphinate] de zinc ou un tris[dialkylphosphinate] d'aluminium, « alkyle » représentant un radical alkyle en C₁ à C₁₀, de préférence un radical alkyle en C₂ à C₆, de manière particulièrement préférée éthyle.

3. Utilisation selon la revendication 1 ou 2, **caractérisée en ce que** des composés de formule générale (I), (II) ou (III) 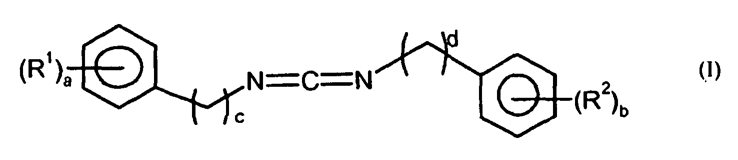 R¹, R² représentant indépendamment l'un de l'autre l'hydrogène ou un radical alkyle en C₁ à C₁₀, aryle en C₆ à C₁₂, aralkyle en C₇ à C₁₃, alkylaryle en C₇ à C₁₃, a, b représentant indépendamment l'un de l'autre un nombre entier de 1 à 5, et
c, d représentant indépendamment l'un de l'autre un nombre entier de 0 à 10 ; 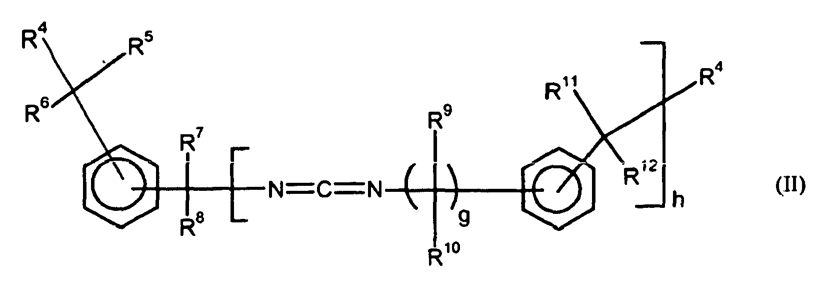
R⁴ représentant NCO,
R⁵, R⁶, R⁷, R⁸, R⁹, R¹⁰, R¹¹, R¹² représentant indépendamment les uns des autres l'hydrogène ou un radical de la série alkyle en C₁ à C₁₀, aryle en C₆ à C₁₂, aralkyle en C₇ à C₁₃, alkylaryle en C₇ à C₁₃,
g représentant un nombre entier de 0 à 5,
h représentant un nombre entier de 1 à 100 ; 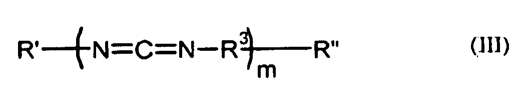 dans la formule (III)
m représentant un nombre entier de 1 à 5 000, de préférence un nombre entier de 2 à 500,
R³ signifiant un radical aryle ou 4,4'-méthylène-bis-(2,6-dialkylphényle) qui porte, en au moins une position ortho, de préférence en les deux positions ortho, par rapport à l'atome de carbone aromatique qui porte le groupe -N=C=N-, des substituants aliphatiques et/ou cycloaliphatiques contenant au moins 2 atomes C, de préférence des radicaux aliphatiques ramifiés ou cycliques contenant au moins 3 atomes C,
R' signifiant aryle, aralkyle ou R-NCO,
R" signifiant -N=C=N-aryle, -N=C=N-aralkyle ou -NCO,
sont utilisés en tant que composés contenant -N=C=N-.

4. Utilisation selon les revendications 1 à 3, **caractérisée en ce que** des composés des formules (IV) à (VI) 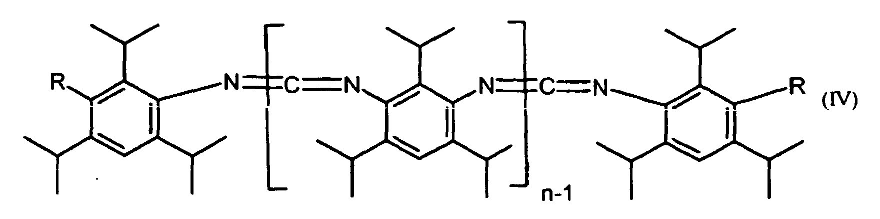 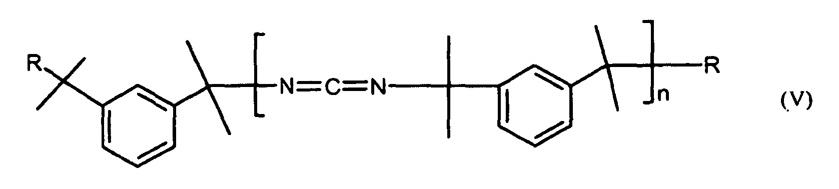 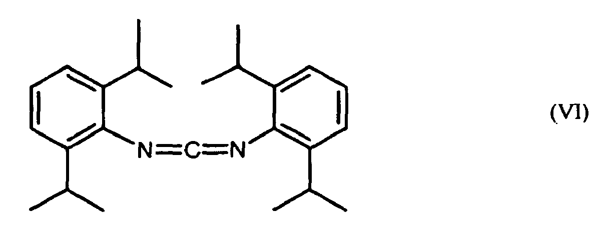 avec R = NCO
n représentant un nombre entier de 1 à 200 sont utilisés en tant que composés contenant -N=C=N-.

5. Utilisation selon la revendication 4, **caractérisée en ce que** des composés de formule (IV) sont utilisés en tant que composés contenant -N=C=N- en combinaison avec du tris[diéthylphosphinate] d'aluminium.

6. Utilisation selon l'une quelconque des revendications 1 à 5, **caractérisée en ce que** des polymères contenant -N=C=N-, pouvant être obtenus par polymérisation radicalaire avec inclusion de monomères contenant des doubles liaisons qui contiennent au moins un groupe -N=C=N-, sont également utilisés en tant que carbodiimides.

7. Utilisation selon la revendication 3, **caractérisée en ce que** les polyalkylène téréphtalates sont utilisés avec
des composés de formule (I) avec un bis[dialkylphosphinate] de zinc, de préférence le bis[diéthylphosphinate] de zinc, ou avec
des composés de formule (I) avec un tris[dialkylphosphinate] d'aluminium, de préférence le tris[diéthylphosphinate] d'aluminium, ou avec
des composés de formule (II) avec un bis[dialkylphosphinate] de zinc, de préférence le bis[diéthylphosphinate] de zinc, ou avec
des composés de formule (II) avec un tris[dialkylphosphinate] d'aluminium, de préférence le tris[diéthylphosphinate] d'aluminium, ou avec
des composés de formule (III) avec un bis[dialkylphosphinate] de zinc, de préférence le bis[diéthylphosphinate] de zinc, ou avec
des composés de formule (III) avec un tris[dialkylphosphinate] d'aluminium, de préférence le tris[diéthylphosphinate] d'aluminium.

8. Utilisation selon la revendication 4, **caractérisée en ce que** les polyalkylène téréphtalates sont utilisés avec
des composés de formule (IV) avec un bis[dialkylphosphinate] de zinc, de préférence le bis[diéthylphosphinate] de zinc, ou avec
des composés de formule (IV) avec un tris[dialkylphosphinate] d'aluminium, de préférence le tris[diéthylphosphinate] d'aluminium, ou avec
des composés de formule (V) avec un bis[dialkylphosphinate] de zinc, de préférence le bis[diéthylphosphinate] de zinc, ou avec
des composés de formule (V) avec un tris[dialkylphosphinate] d'aluminium, de préférence le tris[diéthylphosphinate] d'aluminium, ou avec
des composés de formule (VI) avec un bis[dialkylphosphinate] de zinc, de préférence le bis[diéthylphosphinate] de zinc, ou avec
des composés de formule (VI) avec un tris[dialkylphosphinate] d'aluminium, de préférence le tris[diéthylphosphinate] d'aluminium.

9. Utilisation selon les revendications 3 à 8, **caractérisée en ce que** les groupes -NCO terminaux des composés (II) à (V) représentent également indépendamment les uns des autres des produits de réaction -NCO.

10. Procédé pour empêcher ou réduire la décomposition thermique de masses fondues de polyalkylène téréphtalate contenant un dialkylphosphinate de métal, **caractérisé en ce que** 0,03 à 83 parties en poids de composé contenant -N=C=N- sont utilisées pour 100 parties en poids de la somme du composé contenant - N=C=N- et du dialkylphosphinate de métal, et la masse fondue se trouve dans une plage de températures allant de 230 à 330 °C et à des pressions d'au plus 2 500 bar.

11. Procédé selon la revendication 10, **caractérisé en ce qu'**il s'agit de masses fondues qui se forment lors de la fabrication de matériaux de moulage thermoplastiques par fusion et mélange des composants individuels, de préférence par un procédé de formulation.

12. Procédé selon la revendication 10, **caractérisé en ce qu'**il s'agit de masses fondues lors du moulage par injection, lors du malaxage ou lors de l'extrusion de matériaux de moulage thermoplastiques.
